Europäisches Patentamt

European Patent Office

Office européen des brevets

(11) Veröffentlichungsnummer: **0 139 873**
**A1**

## (12) EUROPÄISCHE PATENTANMELDUNG

(21) Anmeldenummer: **84108478.3**

(51) Int. Cl.⁴: **G 01 F 23/36**

(22) Anmeldetag: **18.07.84**

(30) Priorität: **16.09.83 DE 8326659 U**

(43) Veröffentlichungstag der Anmeldung:
**08.05.85 Patentblatt 85/19**

(84) Benannte Vertragsstaaten:
**DE FR GB IT SE**

(71) Anmelder: **VDO Adolf Schindling AG**
**Gräfstrasse 103**
**D-6000 Frankfurt/Main(DE)**

(72) Erfinder: **Metzger, Gerhard**
**Auf der Platt 29**
**D-6246 Glashütten 1(DE)**

(72) Erfinder: **Kalk, Heinz**
**Offenbacher Strasse 139**
**D-6078 Neu-Isenburg(DE)**

(72) Erfinder: **Rau, Karl**
**Thomas-Mann-Strasse 30**
**D-6052 Mühlheim(DE)**

(74) Vertreter: **Könekamp, Herbert, Dipl.-Ing.**
**Sodener Strasse 9**
**D-6231 Schwalbach(DE)**

(54) Flüssigkeitsniveaugeber.

(57) Ein Flüssigkeitsniveaugeber hat einen Hebel (12) mit einem Schwimmer (13) an seinem freien Ende. Dieser Hebel ist mittels einer Welle (11) schwenkbar in einem Aufsteckteil (10) gelagert. Dieses Aufsteckteil (10) enthält auch eine Widerstandsbahn sowie einen entsprechend den Bewegungen des Hebels (12) über die Widerstandsbahn gleitenden Schleifer.

Das Aufsteckteil (10) ist als Ganzes mittels Rastnasen (8, 9) auf ein Halteteil (5) aufclipsbar.

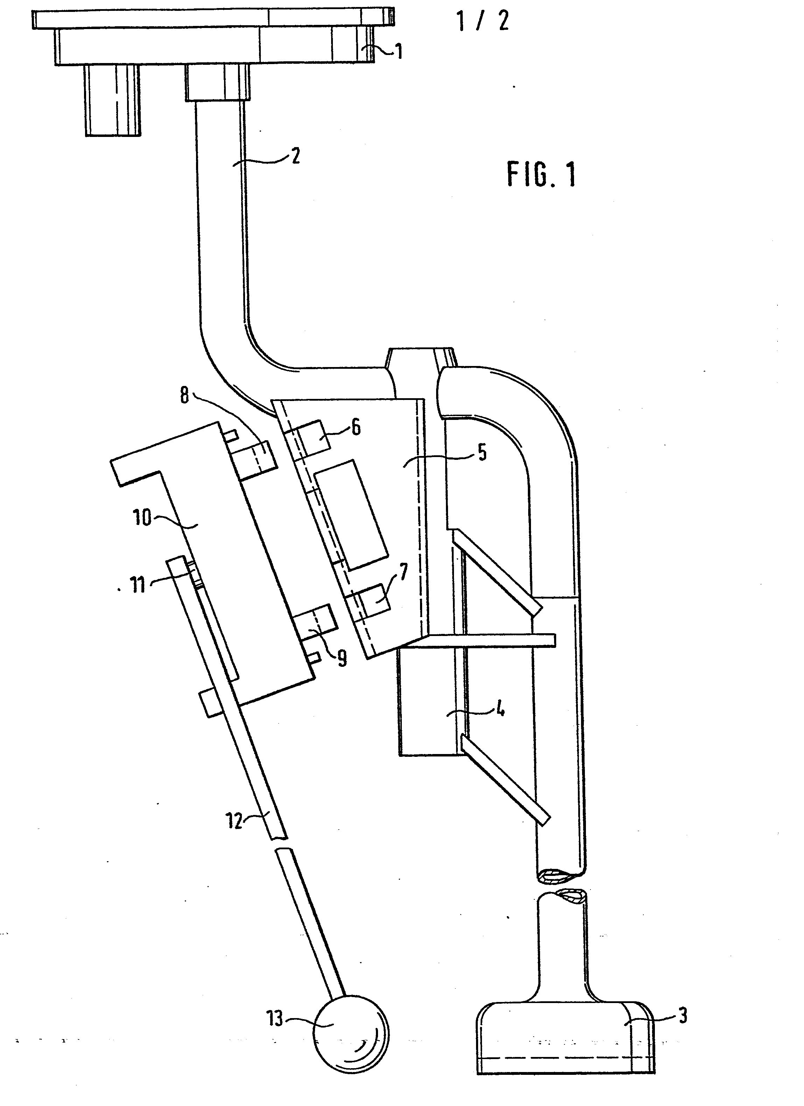

Durch diese Gestaltung kann für unterschiedliche Einsatzgegebenheiten stets ein identisches Aufsteckteil mit den für den Flüssigkeitsniveaugeber funktionell wesentlichen Bauteilen verwendet werden (Figur 1).

FIG. 1

VDO Adolf Schindling AG    - 1 -    6ooo Frankfurt/Main 9o
Gräfstraße 1o3

Flüssigkeitsniveaugeber

Die Neuerung bezieht sich auf einen Flüssigkeitsniveaugeber, insbesondere für Kraftfahrzeugtanks, bestehend aus
einem mittels einer Welle schwenkbar gelagerten, einen
Schwimmer tragenden Hebel, der mit einem Schleiferarm mit
einem Schleifkontakt in Verbindung steht, der bei Schwenkung
des Hebels entlang einer elektrischen Widerstandsbahn bewegbar ist. Ein solcher Flüssigkeitsniveaugeber ist beispielsweise in der DE-OS 31 46 213 beschrieben.

Bei Flüssigkeitsniveaugebern handelt es sich um ein Massenprodukt, das möglichst billig herstellbar sein muß. Schon
sehr geringe Kosteneinsparungen bringen einen großen wirtschaftlichen Fortschritt. Bisher steht einer weiteren
Senkung der Herstellungskosten entgegen, daß für verschiedene Kraftfahrzeugtanks die Flüssigkeitsniveaugeber
unterschiedlich bemessen sein müssen, so daß verschiedene
Serien im Aufbau zwar gleicher, maßlich jedoch voneinander
abweichender Flüssigkeitsniveaugeber gefertigt werden
müssen.

Der Neuerung liegt die Aufgabe zugrunde, einen Flüssigkeitsniveaugeber so auszubilden, daß möglichst viele Bauteile in einer Baugruppe zusammengefaßt unabhängig von Einsatzgegebenheiten stets völlig gleich ausgeführt werden können.

Diese Aufgabe wird neuerungsgemäß dadurch gelöst, daß der den Schwimmer tragende Hebel in einem Aufsteckteil gelagert ist, welches zugleich die Widerstandsbahn und den Schleifer-arm enthält, und daß in ein Halteteil eines Trägers einclipsbar ausgebildet ist.

Der Vorteil der Neuerung liegt darin, daß die für die Funktion wesentlichen und für verschiedene Einsatzfälle stets gleichbleibenden Teile zu einer Baugruppe zusammengefaßt sind. Das neuerungsgemäße Aufsteckteil kann mit dem Hebel, der Leiterbahn und dem Schleiferarm komplett vormontiert werden. Anschließend ist es nur noch auf das Halteteil eines dem jeweiligen Kraftfahrzeugtank angepaßten Trägers aufzuclipsen. Das Aufsteckteil kann sogar derart gestaltet·sein, daß es auch um 18o Grad verdreht aufclipsbar ist, um die Richtung des Hebels mit dem Schwimmer entsprechend verändern zu können. Denkbar ist bei entsprechender Gestaltung des Halteteils auch die Möglichkeit einer um 9o Grad verdrehten Anordnung.

Konstruktiv besonders einfach gestaltet sich der neuerungsgemäße Flüssigkeitsniveaugeber, wenn das Aufsteckteil widerhakenartige Rastnasen hat und das Halteteil mit entsprechenden Rastöffnungen versehen ist.

Eine andere, vorteilhafte Ausgestaltung der Neuerung besteht darin, daß das Aufsteckteil zur exakten Halterung auf dem Halteteil zwei Zentrierstifte und das Halteteil entsprechende Zentrieröffnungen hat. Bei einer solchen Ausgestaltung werden die Rastnasen durch die Schüttelbewegungen in einem Kraftfahrzeug und durch den hin- und herschwappenden Kraftstoff nicht in Querrichtung und damit auf Biegung beansprucht, vielmehr werden diese Kräfte ausschließlich durch die Zentrierstifte auf das Halteteil übertragen.

Der maximale Schwenkweg des Hebels mit dem Schwimmer kann auf einfache Weise durch angespritzte Anschläge am Aufsteckteil beidseitig begrenzt sein.

Eine Anpassung an verschiedene Kraftfahrzeugtanks,ohne daß unterschiedliche Aufsteckteile gefertigt werden müssen, ist möglich, wenn die Anschläge durch Stege erzeugt sind, welche nahe nebeneinander verlaufende Bruchkanten zum Wegbrechen eines gewünschten Stegbereiches haben.

Die Widerstandsbahn ist im Aufsteckteil ebenfalls leicht zu montieren, wenn die elektrische Widerstandsbahn in einer in das Aufsteckteil einclipsbaren Widerstandsplatte vorgesehen ist.

Von Vorteil ist es auch, wenn das Aufsteckteil aus Metall besteht und an Masse anschließbar ist. Bei einer solchen Ausführungsform kann der Strom von der Widerstandsbahn über den Schleifer in den Hebel und von dort unmittelbar in das Aufsteckteil zur Masse fließen. Es ist nicht nötig, im Bereich der Lagerung des Hebels einen Massekontakt an dem Aufsteckteil vorzusehen. Falls der Hebel aus Kunststoff ist, kann er nahe der Widerstandsbahn eine Fahne haben, die auf dem Aufsteckteil schleift und dadurch den Strom vom Schleifer zur Masse leitet.

Die Neuerung läßt verschiedene Ausführungsmöglichkeiten zu. Zu ihrer Verdeutlichung ist eines davon teilweise schematisch in der Zeichnung dargestellt und wird nachfolgend beschrieben. Die Zeichnung zeigt in

Figur 1 eine schematische Seitenansicht auf den

- 4 -

neuerungsgemäßen Flüssigkeitsniveaugeber
mit einem noch nicht eingeclipsten Aufsteckteil,

Figur 2    einen Blick von vorne auf das neuerungsgemäße Aufsteckteil,

Figur 3    einen Blick von der Seite auf das Aufsteckteil gemäß Figur 2,

Figur 4    einen Schnitt durch das Aufsteckteil entlang
der Linie IV-IV in Figur 2.

Die Figur 1 zeigt einen Tankstutzeneinsatz 1, von dem aus
ein Kraftstoffansaugrohr 2 nach unten zu einer Ansaugglocke
3 führt. Die Ansaugglocke 3 ist in nicht dargestellter, jedoch bekannter Weise so ausgebildet, daß sie einen vertikalen
Hub auszuführen vermag, um auf jeden Fall bis zur tiefsten
Stelle des nicht dargestellten Bodens des Kraftfahrzeugtanks
zu gelangen. Am Kraftstoffansaugrohr 2 stützt sich ein
Träger 4 ab, der ein Halteteil 5 haltert. Das Halteteil 5
hat vier Rastöffnungen, von denen zwei Rastöffnungen 6, 7
in Figur 1 zu sehen sind. In diesen Rastöffnungen 6, 7 vermögen widerhakenartige Rastnasen 8, 9 eines Aufsteckteils 1o
zu rasten. Dieses Aufsteckteil 1o haltert um eine Welle 11
schwenkbar einen Hebel 12, der an seinem freien Ende einen
Schwimmer 13 trägt. Je nach Flüssigkeitsniveau wird dieser
Schwimmer 13 mehr oder weniger angehoben, so daß der Hebel 12
sich verschwenkt und dabei mit einem nicht dargestellten
Schleiferarm über eine elektrische Widerstandsbahn wandert,
so daß in bekannter Weise ein dem Füllstand entsprechendes
Signal gewonnen werden kann. Wichtig für die Neuerung ist
nicht die Gestaltung des Schleiferarmes und der Widerstandsbahn, sondern die Tatsache, daß diese Bauteile in dem Aufsteckteil 1o angeordnet sind.

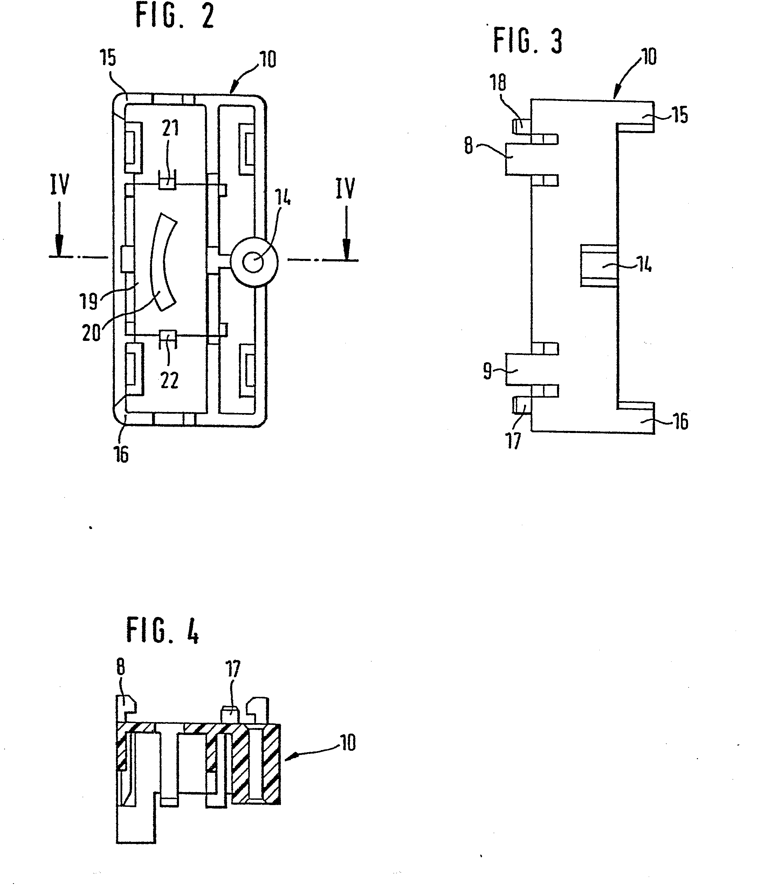

Die Figuren 2 bis 4 lassen die Gestaltung des Aufsteckteils 1o genauer erkennen. In den Figuren 2 und 3 sieht man eine Lagerstelle 14 für die Welle 1 des Hebels 12. Weiterhin erkennt man in Figur 3, daß an der Stirnfläche des Aufsteckteils 1o gegenüberliegend zwei Anschläge 15, 16 für den Hebel 12 angespritzt sind. Diese Anschläge 15, 16 sind auch in Figur 2 zu erkennen. Sie begrenzen den maximalen Ausschlag des Hebels 12 nach beiden Seiten. Nicht dargestellt ist, daß die Anschläge 15, 16 Bruchkanten haben, durch die mehr oder weniger Material wegbrechbar ist, so daß für verschiedene Einsatzfälle die Lage der Anschläge veränderbar ist.

Die bereits bei Erläuterung der Figur 1 erwähnten Rastnasen 8, 9 sind ebenfalls in Figur 3 zu erkennen. Weiterhin zeigt Figur 3 zwei Zentrierstifte 17, 18, die in in der Zeichnung nicht dargestellte Zentrieröffnungen des Aufsteckteils 1o zu greifen vermögen, wenn das Aufsteckteil 1o auf das Halteteil 5 aufgeclipst ist.

Ein weiteres wichtiges Detail ist in Figur 2 zu erkennen. Die Zeichnung zeigt eine Widerstandsplatte 19 mit einer Widerstandsbahn 2o. Diese Widerstandsplatte 19 ist in das Aufsteckteil 1o eingeclipst und hat zu diesem Zweck an ihren beiden Schmalseiten jeweils eine Rastnase 21, 22.

VDO Adolf Schindling AG      - 1 -      6ooo Frankfurt/Main 9o
Gräfstraße 1o3

G-R
1733
6. September 1983

Ansprüche

1. Flüssigkeitsniveaugeber, insbesondere für Kraftfahrzeugtanks, bestehend aus einem mittels einer Welle
   schwenkbar gelagerten, einen Schwimmer tragenden Hebel,
   der mit einem Schleiferarm mit einem Schleifkontakt in
   Wirkverbindung steht, der bei Schwenkung des Hebels
   entlang einer elektrischen Widerstandsbahn bewegbar
   ist, dadurch gekennzeichnet, daß der den Schwimmer (13)
   tragende Hebel (12) in einem Aufsteckteil (1o) gelagert ist, welches zugleich die Widerstandsbahn (2o)
   und den Schleiferarm enthält, und das in ein Halteteil
   (5) eines Trägers (4) einclipsbar ausgebildet ist.

2. Flüssigkeitsniveaugeber nach Anspruch 1, dadurch gekennzeichnet, daß das Aufsteckteil (1o) widerhakenartige Rastnasen (8, 9) hat, und das Halteteil (5) mit
   entsprechenden Rastöffnungen (6, 7) versehen ist.

3. Flüssigkeitsniveaugeber nach Anspruch 1 oder einem
   der folgenden, dadurch gekennzeichnet, daß das Aufsteckteil (1o) zur exakten Halterung auf dem Halteteil (5)

zwei Zentrierstifte (17, 18),und das Halteteil (5) entsprechende Zentrieröffnungen hat.

4. Flüssigkeitsniveaugeber nach Anspruch 1 oder einem der
   folgenden, dadurch gekennzeichnet, daß der maximale
   Schwenkweg des Hebels (12) durch angespritzte Anschläge
   (15, 16) am Aufsteckteil (1o) beidseitig begrenzt ist.

5. Flüssigkeitsniveaugeber nach Anspruch 1 oder einem der
   folgenden, dadurch gekennzeichnet, daß die Anschläge (15,
   16) durch Stege erzeugt sind, welche nahe nebeneinander
   verlaufende Bruchkanten zum Wegbrechen eines gewünschten
   Stegbereiches haben.

6. Flüssigkeitsniveaugeber nach Anspruch 1 oder einem der
   folgenden, dadurch gekennzeichnet, daß die elektrische
   Widerstandsbahn (2o) in einer in das Aufsteckteil (1o)
   einclipsbaren Widerstandsplatte (19) vorgesehen ist.

7. Flüssigkeitsniveaugeber nach Anspruch 1 oder einem der
   folgenden, dadurch gekennzeichnet, daß das Aufsteckteil
   (1o) aus Metall besteht und an Masse anschließbar ist.

FIG. 1

FIG. 2

FIG. 3

FIG. 4

Europäisches Patentamt

**EUROPÄISCHER RECHERCHENBERICHT**

Nummer der Anmeldung

| | EINSCHLÄGIGE DOKUMENTE | | EP 84108478.3 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| D,X | DE - A1 - 3 146 213 (VDO)<br>    * Fig. 1,2; Seite 6, Zeile 32 - Seite 7, Zeile 7 * | 1 | G 01 F 23/36 |
| Y | | 4,6 | |
| Y | DE - B2 - 2 041 338 (SOCIETE)<br>    * Fig. 1,2; Spalte 1, Zeilen 54-58; Spalte 3, Zeile 11 - Spalte 4, Zeile 21 * | 4 | |
| A | | 1 | |
| Y | DE - A1 - 3 132 346 (SMITHS)<br>    * Seite 6, Zeilen 4-7; Fig. 1,2,5a,b; Seite 7, Zeile 18 - Seite 8, Zeile 13; Seite 10, Zeile 29 - Seite 13, Zeile 17 * | 6 | RECHERCHIERTE SACHGEBIETE (Int. Cl 4) |
| A | | 1,4,5 | G 01 F 23/00 |

Der vorliegende Recherchenbericht wurde für alle Patentansprüche erstellt.

| Recherchenort<br>WIEN | Abschlußdatum der Recherche<br>22-11-1984 | Prüfer<br>GRONAU |
|---|---|---|